# FASCICULE DE BREVET EUROPEEN

(11) **EP 2 988 014 B1**
(45) Date de publication et mention de la délivrance du brevet: **16.05.2018**
(21) Numéro de dépôt: 15175489.2
(22) Date de dépôt: 06.07.2015
(51) Int. Cl.: F16D 25/0638, F16D 21/06

(54) **DISPOSITIF D'EMBRAYAGE POUR UN VÉHICULE AUTOMOBILE**
KUPPLUNGSVORRICHTUNG FÜR KRAFTFAHRZEUG
CLUTCH DEVICE FOR A MOTOR VEHICLE

(30) Priorité: 01.08.2014 FR 1457500
(43) Date de publication de la demande: 24.02.2016
(73) Titulaire: Valeo Embrayages, 80009 Amiens Cedex 2 (FR)
(72) Inventeur: ARHAB, Rabah, 95350 ST BRICE SOUS FORET (FR); CAUMARTIN, Laurent, 80600 BEAUQUESNE (FR); RIBOT, Herve, 80200 PERONNE (FR)
(74) Mandataire: Cardon, Nicolas

(56) Documents cités:
- DE-A1-102012 023 721
- DE-A1-102012 221 958
- DE-U1- 20 310 015
- US-A1- 2008 271 968
- US-A1- 2008 277 228

## Description

La présente invention concerne un dispositif d'embrayage pour un véhicule automobile.

La demande de brevet EP 1 489 324 divulgue un dispositif d'embrayage pour un véhicule automobile, comprenant des moyens d'entrée de couple destinés à être couplés à un vilebrequin, un premier arbre de sortie de couple, un second arbre de sortie de couple, un premier mécanisme d'embrayage humide apte à coupler ou découpler les moyens d'entrée de couple et le premier arbre de sortie de couple, et un second mécanisme d'embrayage humide apte à coupler ou découpler les moyens d'entrée de couple et le second arbre de sortie de couple.

Les premier et second mécanismes d'embrayage comportent respectivement des premiers et des seconds disques montés respectivement sur un premier et un second supports externes appartenant aux moyens d'entrée de couple. Les premiers et seconds mécanismes d'embrayage comportent en outre respectivement des premiers et des seconds contre-disques montés respectivement sur un premier et un second supports internes couplés en rotation respectivement au premier et au second arbres de sortie de couple.

Les premiers et seconds mécanismes d'embrayage comportent respectivement un premier piston et un second piston, chaque piston étant déplaçable entre une position d'embrayage dans laquelle ledit piston plaque les disques sur les contre-disques associés du mécanisme d'embrayage correspondant, et une position de débrayage dans laquelle ledit piston libère les disques et les contre-disques du mécanisme d'embrayage correspondant. Chaque piston est associé à une chambre de pression et à une chambre de contre-pression, situées de part et d'autre du piston correspondant, l'une au moins desdites chambre de pression étant délimitée notamment par le piston correspondant et par le support externe correspondant. Un support d'étanchéité est fixé sur le support externe correspondant, des moyens d'étanchéité étant montés sur le support d'étanchéité. DE 203 10 015 U1 divulgue un joint à lèvre surmoulé sur un support d'étanchéité soudé sur le support externe correspondant. Il existe un besoin de faciliter la fixation du support d'étanchéité sur le support externe correspondant tout en assurant une bonne étanchéité des chambres de pression.

L'invention a notamment pour but d'apporter une solution simple, efficace et économique à ce problème.

A cet effet, elle propose un dispositif d'embrayage pour un véhicule automobile, comprenant des moyens d'entrée de couple destinés à être couplés à un vilebrequin, un premier arbre de sortie de couple, un second arbre de sortie de couple, un premier mécanisme d'embrayage humide apte à coupler ou découpler les moyens d'entrée de couple et le premier arbre de sortie de couple, un second mécanisme d'embrayage humide apte à coupler ou découpler les moyens d'entrée de couple et le second arbre de sortie de couple, les premier et second mécanismes d'embrayage comportent respectivement des premiers et des seconds disques montés respectivement sur un premier et un second supports externes appartenant aux moyens d'entrée de couple, les premiers et seconds mécanismes d'embrayage comportant en outre respectivement des premiers et des seconds contre-disques montés respectivement sur un premier et un second supports internes couplés en rotation respectivement au premier et au second arbres de sortie de couple, les premiers et seconds mécanismes d'embrayage comportant respectivement un premier piston et un second piston, chaque piston étant déplaçable entre une position d'embrayage dans laquelle ledit piston plaque les disques sur les contre-disques associés du mécanisme d'embrayage correspondant, et une position de débrayage dans laquelle ledit piston libère les disques et les contre-disques du mécanisme d'embrayage correspondant, chaque piston étant associé à une chambre de pression et à une chambre de contre-pression, situées de part et d'autre du piston correspondant, l'une au moins desdites chambre de pression étant délimitée notamment par le piston correspondant et par le support externe correspondant, un support d'étanchéité étant fixé sur le support externe correspondant, des moyens d'étanchéité étant montés sur le support d'étanchéité, caractérisé en ce que lesdits moyens d'étanchéité assurent l'étanchéité entre ledit support d'étanchéité et le piston correspondant, d'une part, et l'étanchéité entre ledit support d'étanchéité et le support externe correspondant, d'autre part.

De cette manière, il est possible de dissocier la fonction de fixation du support d'étanchéité sur le support externe correspondant de la fonction d'étanchéité elle-même. En d'autres termes, les moyens de fixation du support d'étanchéité sur le support externe n'ont pas besoin d'assurer le rôle d'étanchéité, ce qui facilite la mise en oeuvre d'une telle fixation, tout en garantissant une bonne étanchéité de la chambre de pression. Selon l'invention, le support d'étanchéité est annulaire et est fixé au support externe correspondant par des moyens de fixation s'étendant sur une partie seulement de la circonférence dudit support d'étanchéité, tels par exemple que des moyens de fixation ponctuels.

Une telle fixation est moins coûteuse et moins complexe à mettre en oeuvre.

Le support d'étanchéité peut être fixé au support externe par soudage, par exemple par soudage laser ou par soudure électrique.

Le support d'étanchéité peut également être fixé au support externe par rivetage, par exemple par l'intermédiaire de rivets extrudés venant de matière avec le support externe correspondant.

Selon une forme de réalisation de l'invention, chaque chambre de pression peut être délimitée notamment par le piston correspondant et par le support externe correspondant, un support d'étanchéité étant fixé sur chaque support externe, des moyens d'étanchéité étant montés sur chaque support d'étanchéité, lesdits moyens d'étanchéité assurant l'étanchéité entre le support d'étanchéité correspondant et le piston correspondant, d'une part, et l'étanchéité entre ledit support d'étanchéité correspondant et le support externe correspondant, d'autre part. Selon l'invention, les moyens d'étanchéité comportent au moins un joint annulaire à lèvre surmoulé sur le support d'étanchéité

En outre, le support d'étanchéité peut comporter une partie cylindrique et une partie annulaire radiale, fixée au support externe correspondant, les moyens d'étanchéité s'étendant à la fois sur la partie cylindrique et sur la partie radiale.

Le dispositif peut comporter un moyeu d'alimentation comportant un circuit de refroidissement, un premier circuit de fluide apte à être relié fluidiquement aux chambres de pression et un second circuit de fluide apte à être reliée fluidiquement aux chambres de contre-pression.

Dans ce cas, le premier support externe et le second support externe peuvent être couplés en rotation au moyeu d'alimentation.

Les moyens d'entrée de couple peuvent comporter un organe d'entrée de couple, couplé en rotation au premier support externe et délimitant avec celui-ci un volume interne dans lequel sont logés les premiers et seconds mécanismes d'embrayage.

L'invention concerne également un véhicule automobile comportant au moins un dispositif du type précité.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une demi-vue en coupe d'un dispositif d'embrayage selon une première forme de réalisation de l'invention,
- la figure 2 est une vue de détail de la figure 1,
- la figure 3 est une vue correspondant à la figure 2, illustrant une seconde forme de réalisation de l'invention.

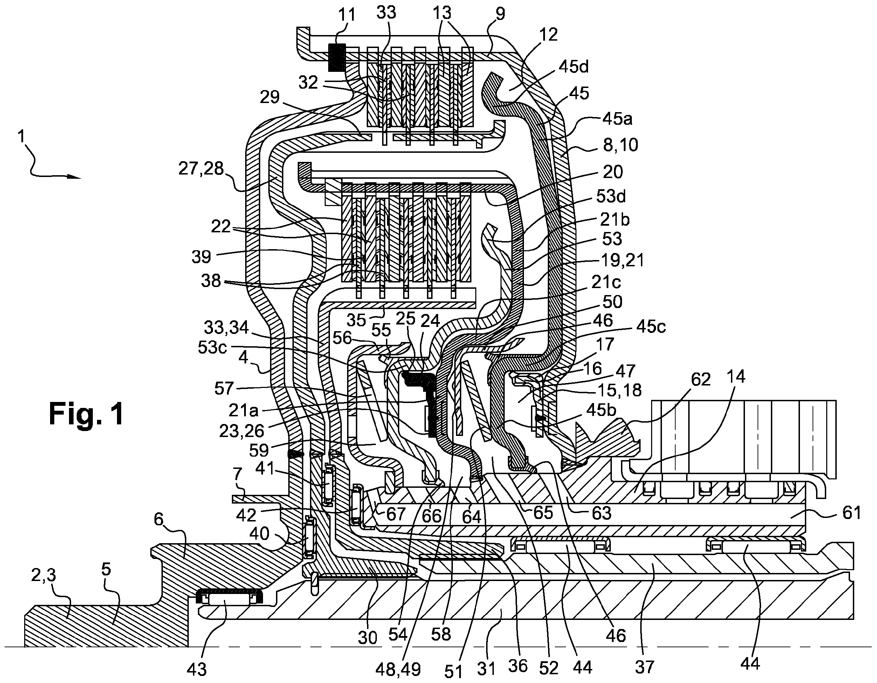

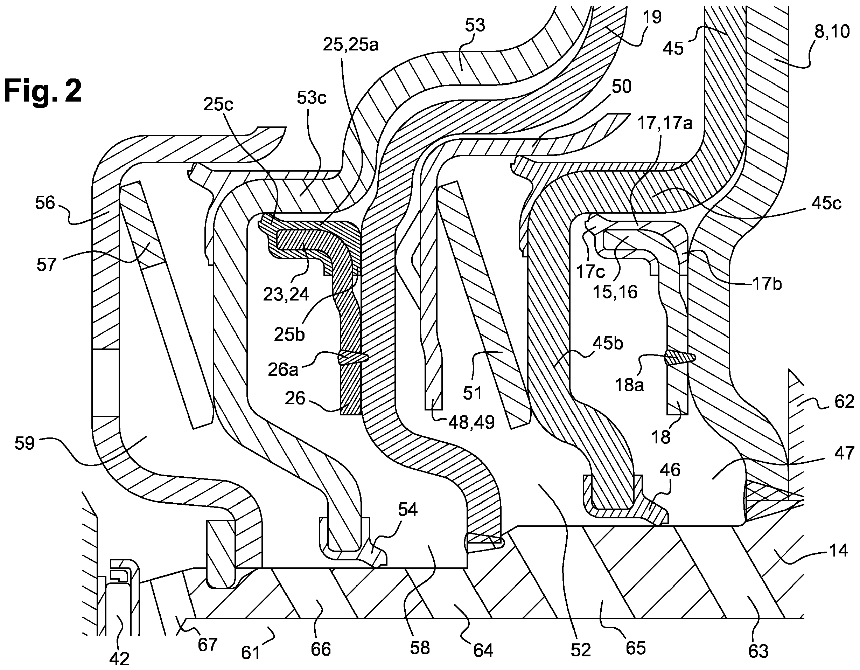

Un dispositif d'embrayage 1 selon une forme de réalisation de l'invention est illustré aux figures 1 et 2. Celui-ci comporte un organe d'entrée de couple 2 comprenant une partie avant 3 s'étendant axialement et destinée à être couplée à un dispositif d'amortissement, lui-même couplé à un vilebrequin d'un moteur à combustion interne d'un véhicule automobile, et une partie arrière 4 s'étendant radialement. La partie avant 3 comporte, d'avant en arrière, une première partie 5 cylindrique et une deuxième partie 6 cylindrique et de plus grand diamètre que la première partie 5. La partie arrière radiale 4 comporte un rebord cylindrique 7 s'étendant vers l'avant et présentant un diamètre plus grand que le diamètre de la deuxième partie cylindrique 6.

La première partie 5 sert au montage d'un roulement. La deuxième partie 6 est destinée à être couplée au dispositif d'amortissement, par exemple par l'intermédiaire de cannelures complémentaires. Le rebord cylindrique 7 est destiné à supporter un joint afin d'éviter que du fluide, tel que de l'huile, ne s'échappe du côté du moteur du véhicule.

La périphérie radialement externe de la partie arrière 4 de l'organe d'entrée de couple 2 est couplée en rotation à un premier support externe 8. Plus particulièrement, le premier support externe 8 comporte une partie avant 9 globalement cylindrique et une partie arrière annulaire 10 s'étendant radialement vers l'intérieur depuis la partie avant 9.

La périphérie radialement externe de l'organe d'entrée de couple 2 est couplée en rotation à la partie avant 9 et est maintenue axialement en position à l'aide d'un anneau élastique ou circlips 11. L'organe d'entrée de couple 2 et le premier support externe 8 délimitent un volume interne 12.

Des premiers disques 13 sont en outre montés sur la partie avant 9 du premier support externe 8, les premiers disques 13 étant espacés les uns des autres, logés dans le volume interne 12 précité et aptes à coulisser le long de ladite partie avant 9.

La périphérie interne de la partie arrière 10 du premier support externe 8 est fixée, par exemple par soudage, à un moyeu d'alimentation en fluide 14, par exemple en huile. Un premier support de joint 15 est en outre fixé sur la face avant de la partie arrière 10 du premier support externe 8. Le premier support de joint 15 comporte une partie cylindrique avant 16 et une partie annulaire radiale arrière 18, fixée sur le premier support externe 8 par soudage laser par points. Les points de soudage sont référencés 18a sur les figures 1 et 2.

Un joint à lèvre annulaire 17 est surmoulé sur la partie cylindrique 16 et sur la portion radialement externe de la partie radiale 18. Le joint à lèvre 17 comporte une partie cylindrique 17a située au niveau de la partie 16 du support de joint 15 et dont l'extrémité avant comporte une lèvre 17c, et une partie annulaire radiale 17b, située au niveau de la partie 18 du support de joint 15.

Le dispositif d'embrayage 1 comporte en outre un second support externe 19 comportant, comme précédemment, une partie avant cylindrique 20 et une partie arrière annulaire 21 s'étendant radialement et dont la périphérie radialement interne est fixée, par exemple par soudage, au moyeu d'alimentation 14. Plus particulièrement la partie arrière 21 comporte une zone radialement interne 21a et une zone radialement externe 21b s'étendant radialement et décalées axialement l'une de l'autre. La zone radialement interne 21a est décalée vers l'avant par rapport à la zone radialement externe 21b et est reliée à cette dernière par un épaulement cylindrique 21c.

La partie arrière 21 du second support externe 19 est monté en avant de la partie arrière 10 du premier support externe 8, le second support externe 19 étant logé à l'intérieur du volume interne 12. Des seconds disques 22 sont en outre montés sur la partie avant 20 du second support externe 19, les seconds disques 22 étant espacés les uns des autres et sont aptes à coulisser le long de ladite partie avant 20.

Un second support de joint 23 est en outre fixé sur la face avant de la zone 21a de la partie arrière 21. Le second support de joint 23 comporte une partie cylindrique avant 24 et une partie annulaire radiale arrière 26, fixée sur le second support externe 19 par soudage laser par points. Les points de soudage sont référencés 26a sur les figures 1 et 2.

Un joint à lèvre annulaire 25 est surmoulé sur la partie cylindrique 24 et sur la portion radialement externe de la partie radiale 26. Le joint à lèvre 25 comporte une partie cylindrique 25a située au niveau de la partie 24 du support de joint 23 et dont l'extrémité avant comporte une lèvre 25c, et une partie annulaire radiale 25b, située au niveau de la partie 26 du support de joint 23.

Le dispositif d'embrayage 1 comporte de plus un premier support interne 27 comprenant une partie avant 28 annulaire s'étendant radialement et une partie arrière cylindrique 29 s'étendant depuis la périphérie radialement externe de la partie avant 28. Un premier moyeu cylindrique 30 est situé en périphérie radialement interne de la partie avant 28. Le premier moyeu cylindrique 30 comporte des cannelures internes coopérant avec des cannelures externes d'un premier arbre de sortie de couple 31 ou premier arbre d'entrée d'une boîte de vitesses. Cet arbre 31 est par exemple associé aux rapports de vitesses impairs de la boîte de vitesses.

Des premiers contre-disques 32 sont couplés en rotation à la partie arrière 29 du premier support interne 27 et sont intercalés à chaque fois entre deux premiers disques 13, les premiers contre-disques 32 étant aptes à coulisser le long de ladite partie arrière 29. Chaque contre-disque 32 porte des garnitures de friction 33, comme cela est bien connu en soi.

Les premiers disques 13 et les premiers contre-disques 32 appartiennent à un premier mécanisme d'embrayage humide.

Le dispositif comporte en outre un second support interne 33 comprenant une partie avant annulaire 34 s'étendant radialement et une partie arrière cylindrique 35 s'étendant depuis la périphérie radialement externe de la partie avant 34. Un second moyeu cylindrique 36 est situé en périphérie radialement interne de la partie avant 34. Le second moyeu cylindrique 36 comporte des cannelures internes coopérant avec des cannelures externes d'un second arbre de sortie de couple 37 ou second arbre d'entrée d'une boîte de vitesses. Cet arbre 37 est par exemple associé aux rapports de vitesses pairs de la boîte de vitesses.

Les arbres de sortie de couple 31, 37 et le moyeu d'alimentation 14 sont coaxiaux, le second arbre de sortie de couple 37 étant monté à l'intérieur du moyeu d'alimentation 14, le premier arbre de sortie de couple 31 étant monté à l'intérieur du second arbre de sortie de couple 37.

Des seconds contre-disques 38 sont couplés en rotation à la partie arrière 35 du second support interne 33 et sont intercalés à chaque fois entre deux seconds disques 22, les seconds contre-disques 38 étant aptes à coulisser le long de ladite partie arrière 35. Chaque contre-disque 38 porte des garnitures de friction 39.

Les seconds disques 22 et les seconds contre-disques 39 sont situés radialement à l'intérieur de la partie cylindrique 20 du second support externe 19 et axialement à l'avant de la partie radial 21 dudit support externe 19. Les seconds disques 22 et les seconds contre-disques 39 appartiennent à un second mécanisme d'embrayage humide et sont situés radialement à l'intérieur des premiers disques 13 et des premiers contre-disques 32.

La partie avant 28 du premier support interne 27 est située axialement entre la partie radiale 4 de l'organe d'entrée de couple 2 et la partie avant 34 du second support interne 33. La partie avant 34 du second support interne 33 est située axialement entre la partie avant 28 du premier support interne 27 et l'extrémité avant du moyeu d'alimentation 14.

Un palier 40 est monté axialement entre l'organe d'entrée de couple 2 et le premier support interne 27. Un palier 41 est monté axialement entre le premier support interne 27 et le second support interne 33. Un palier 42 est monté axialement entre le second support interne 33 et le moyeu d'alimentation 14. Ces paliers 40, 41, 42 sont par exemple formés par des butées à aiguilles.

En outre, un palier 43 est monté radialement entre l'extrémité avant du premier arbre de sortie de couple 31 et la partie avant 3 de l'organe d'entrée de couple 2. Des paliers 44 sont en outre montés radialement entre le moyeu d'alimentation 14 et le second arbre 37. Ces paliers 43, 44 sont par exemple formés par des roulements à rouleaux.

Le dispositif d'embrayage 1 comporte également un premier piston 45, associé au premier mécanisme d'embrayage. Le premier piston 45 est monté axialement entre le premier support externe 8 et le second support externe 19. Le premier piston 45 comporte globalement deux zones 45a, 45b s'étendant radialement et décalée axialement l'une de l'autre, délimitant entre elles un épaulement cylindrique 45c. La périphérie radialement interne du premier piston 45 est équipée d'un joint à lèvre 46 en appui sur la surface externe du moyeu d'alimentation 14. Par ailleurs, la lèvre 17c du joint 17 est en appui sur la surface radialement interne de l'épaulement 45c du premier piston 45. Une première chambre de pression étanche 47 est ainsi délimitée par la zone 45b, l'épaulement 45c, le support de joint 15, la périphérie radialement interne du premier support externe 8 et le moyeu d'alimentation 14.

La périphérie radialement externe 45d du premier piston 45 est apte à venir en appui contre l'un des premiers disques 13. Le premier piston 45 est déplaçable axialement entre une position d'embrayage dans laquelle le premier piston 45 tend à plaquer les premier disques 13 sur les premier contre-disques 32 associés du premier mécanisme d'embrayage, et une position de débrayage dans laquelle le premier piston 45 tend à libérer les premier disques 13 et les premier contre-disques 32 du premier mécanisme d'embrayage.

Une première rondelle 48 est montée en avant du premier piston 45, ladite première rondelle 48 étant placée au contact sur la face arrière de la partie arrière 21 du second support externe 19, plus particulièrement dans la zone 21a, ladite première rondelle 48 comportant une partie annulaire radiale avant 49, dont la périphérie radialement externe est prolongée axialement vers l'arrière par une partie arrière cylindrique 50, située radialement à l'intérieur de l'épaulement 21c.

Un premier organe de rappel élastique, tel par exemple qu'une rondelle Belleville 51, est monté axialement entre la partie avant 49 de la première rondelle 48 et le premier piston 45. Le premier organe de rappel élastique 51 tend ainsi à rappeler le premier piston 45 vers sa position de débrayage. Le premier mécanisme d'embrayage est donc du type normalement ouvert.

Le joint à lèvre 46 porté par l'épaulement 45c du premier piston 45 vient en appui sur la partie cylindrique arrière 50 de la première rondelle 48. Une première chambre de contre-pression 52 est ainsi délimitée par la première rondelle 48, le premier piston 45, la périphérie radialement interne du second support externe 19 et le moyeu d'alimentation 14.

Par ailleurs, le dispositif d'embrayage comporte un second piston 53, associé au second mécanisme d'embrayage. Le second piston 53 est monté axialement entre le second support externe 19 et le second support interne 33. Comme précédemment, le second piston 53 porte un joint à lèvre 54 à sa périphérie interne, ledit joint 54 venant en appui sur le moyeu d'alimentation 14, et un joint à lèvre 55 au niveau d'un épaulement 53c, ledit joint 55 venant en appui sur une partie cylindrique d'une seconde rondelle 56. La lèvre 25c du joint 25 vient en appui sur la surface radialement interne de l'épaulement 53c du second piston 53. La seconde rondelle 56 est montée autour du moyeu d'alimentation 14 et est placée au contact de celui-ci. Un second organe de rappel élastique, tel par exemple qu'une rondelle Belleville 57, est monté entre la seconde rondelle 56 et le second piston 53.

Une seconde chambre de pression étanche 58 est délimitée par le second piston 53, le second porte-joint 23, la périphérie interne du second support externe 19 et le moyeu d'alimentation 14. Une seconde chambre de contre-pression 59 est délimitée par la seconde rondelle 56, le second piston 53 et le moyeu d'alimentation 14.

La périphérie radialement externe 53d du second piston 53 est apte à venir en appui contre l'un des seconds disques 22. Le second piston 53 est déplaçable axialement entre une position d'embrayage dans laquelle le second piston 53 tend à plaquer les seconds disques 22 sur les seconds contre-disques associés 38 du second mécanisme d'embrayage, et une position de débrayage dans laquelle le second piston 53 tend à libérer les seconds disques 22 et les seconds contre-disques 38 du second mécanisme d'embrayage.

Le moyeu d'alimentation 14 comporte trois canalisations 61 définissant trois circuits de fluide, à savoir un circuit de refroidissement, un circuit dit basse pression et un circuit dit haute pression. Les deux circuits de basse et haute pression sont alimentés par des pompes correspondantes. L'une au moins desdits pompes à un organe d'entraînement 62 qui est fixé au moyeu 14, par exemple par soudage, directement en arrière du premier support externe 8.

Le circuit haute-pression débouche dans les première et seconde chambres de pression 47, 58 par des orifices référencés respectivement 63 et 64, tandis que le circuit basse-pression débouche dans les première et seconde chambres de contre-pression 52, 59 et dans le volume interne 12 logeant notamment les premier et second mécanismes d'embrayage, par des orifices référencés respectivement 65, 66 et 67.

En fonctionnement, du fluide sous haute-pression peut être amené soit vers la première chambre de pression 47 et/ou soit vers la seconde chambre de pression 58, de façon à déplacer respectivement le premier piston 45 ou le second piston 53 et actionner ainsi le premier mécanisme d'embrayage et/ou le second mécanisme d'embrayage.

Lors de l'embrayage du premier mécanisme d'embrayage, le couple entrant par l'organe d'entrée de couple 2 est transmis au premier arbre de sortie de couple 31 par l'intermédiaire du premier support externe 8, du premier mécanisme d'embrayage 13, 32 et du premier support interne 27.

Lors de l'embrayage du second mécanisme d'embrayage, le couple entrant par l'organe d'entrée de couple 2 est transmis au second arbre de sortie de couple par l'intermédiaire du premier support externe 8, du moyeu d'alimentation 14, du second support externe 19, du second mécanisme d'embrayage 22, 38 et du second support interne 33.

On notera que les deux mécanismes d'embrayage peuvent être actionnés simultanément notamment lors d'un changement de rapport de vitesses ou lors d'une transition de couple. Lorsque lesdites chambres de pression 47, 58 ne sont pas soumises à un fluide à haute-pression, alors les organes de rappel 51, 57 tendent à rappeler les pistons 45, 53 vers leurs positions de débrayage.

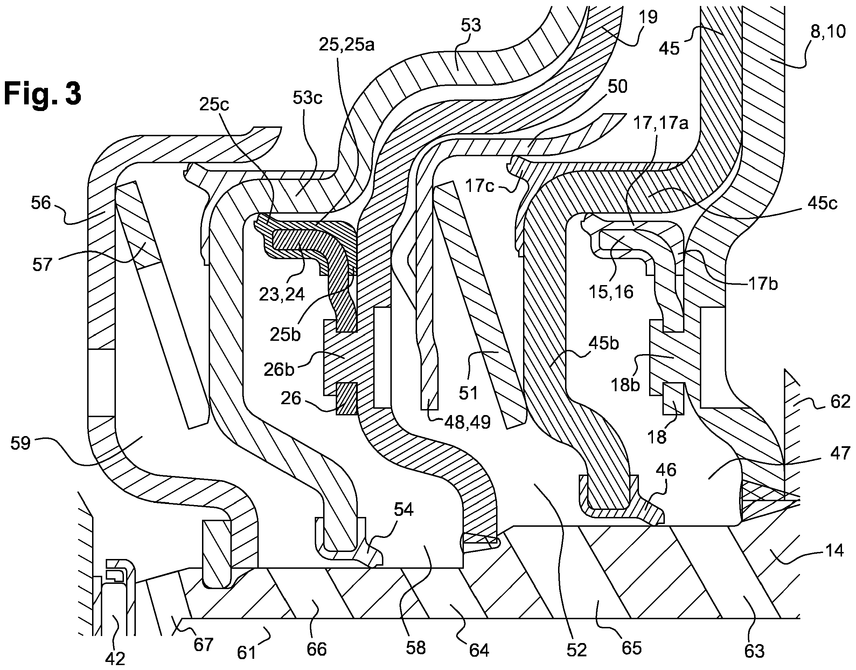

La figure 3 représente une seconde forme de réalisation qui diffère de celle exposée précédemment en référence aux figures 1 et 2 en ce que les parties radiales 18 et 26 des supports de joints 15, 23 sont fixées aux supports externes correspondants 8, 19 par l'intermédiaire de rivets extrudés 18b, 26b venant de matière avec lesdits supports externes 8, 19.

Dans les deux formes de réalisation précitées, les supports de joint 15, 23 sont fixées aux supports externes 8, 19 par l'intermédiaire de moyens de fixation ponctuels, ne s'étendant pas sur toute la circonférence des supports de joints 15, 23. Par ailleurs, dans chacune de ces formes de réalisation, la fonction de fixation du support de joint 15, 23 sur le support externe correspondant 8, 19 est dissociée de la fonction d'étanchéité de la chambre de pression 47, 58, assurée notamment par les joints 17, 25 et par les joints 46, 54. Les moyens de fixation des supports de joints 15, 23 n'ont donc pas besoin d'assurer le rôle d'étanchéité, ce qui facilite la mise en oeuvre d'une telle fixation, tout en garantissant une bonne étanchéité des chambres de pression 47, 58.

## Revendications

1. Dispositif d'embrayage (1) pour un véhicule automobile, comprenant des moyens d'entrée de couple (2) destinés à être couplés à un vilebrequin, un premier arbre de sortie de couple (31), un second arbre de sortie de couple (37), un premier mécanisme d'embrayage humide apte à coupler ou découpler les moyens d'entrée de couple (2) et le premier arbre de sortie de couple (31), un second mécanisme d'embrayage humide apte à coupler ou découpler les moyens d'entrée de couple (2) et le second arbre de sortie de couple (37), les premier et second mécanismes d'embrayage comportent respectivement des premiers et des seconds disques (13, 22) montés respectivement sur un premier et un second supports externes (8, 19) appartenant aux moyens d'entrée de couple, les premiers et seconds mécanismes d'embrayage comportant en outre respectivement des premiers et des seconds contre-disques (32, 38) montés respectivement sur un premier et un second supports internes (27, 33) couplés en rotation respectivement au premier et au second arbres de sortie de couple (31, 37), les premiers et seconds mécanismes d'embrayage comportant respectivement un premier piston et un second piston, chaque piston étant déplaçable entre une position d'embrayage dans laquelle ledit piston (45, 53) plaque les disques (13, 22) sur les contre-disques associés (32, 38) du mécanisme d'embrayage correspondant, et une position de débrayage dans laquelle ledit piston (45, 53) libère les disques (13, 22) et les contre-disques (32, 38) du mécanisme d'embrayage correspondant, chaque piston (45, 53) étant associé à une chambre de pression (47, 58) et à une chambre de contre-pression (52, 59), situées de part et d'autre du piston correspondant (45, 53), l'une au moins desdites chambre de pression (47, 58) étant délimitée notamment par le piston correspondant (45, 53) et par le support externe correspondant (8, 19), un support d'étanchéité (15, 23) étant fixé sur le support externe correspondant (8,19), des moyens d'étanchéité (17, 25) étant montés sur le support d'étanchéité (15, 23), lesdits moyens d'étanchéité (17, 25) assurent l'étanchéité entre ledit support d'étanchéité (15, 23) et le piston correspondant (45, 53), d'une part, et l'étanchéité entre ledit support d'étanchéité (15, 23) et le support externe correspondant (8, 19), d'autre part, lesdits moyens d'étanchéité comportant au moins un joint annulaire (17, 25) à lèvre (17c, 25c) surmoulé sur le support d'étanchéité (15, 23), **caractérisé en ce que** le support d'étanchéité (15, 23) est annulaire et est fixé au support externe correspondant (8, 19) par des moyens de fixation (18a, 26a ; 18b, 26b) s'étendant sur une partie seulement de la circonférence dudit support d'étanchéité (15, 23), tels par exemple que des moyens de fixation ponctuels.

2. Dispositif selon la revendication 1, **caractérisé en ce que** le support d'étanchéité (15, 23) est fixé au support externe (8, 19) par soudage, par exemple par soudage laser (18a, 26a) ou par soudure électrique.

3. Dispositif selon la revendication 2, **caractérisé en ce que** le support d'étanchéité (15, 23) est fixé au support externe (8, 19) par rivetage, par exemple par l'intermédiaire de rivets extrudés (18b, 26b) venant de matière avec le support externe correspondant (8, 19).

4. Dispositif selon l'une des revendications 1 à 3, **caractérisé en ce que** chaque chambre de pression (47, 58) est délimitée notamment par le piston correspondant (45, 53) et par le support externe correspondant (8, 19), un support d'étanchéité (15, 23) étant fixé sur chaque support externe (8, 19), des moyens d'étanchéité (17, 25) étant montés sur chaque support d'étanchéité (15, 23), lesdits moyens d'étanchéité (17, 25) assurant l'étanchéité entre le support d'étanchéité correspondant (15, 23) et le piston correspondant (45, 53), d'une part, et l'étanchéité entre ledit support d'étanchéité correspondant (15, 23) et le support externe correspondant (8, 19), d'autre part.

5. Dispositif selon l'une des revendications 1 à 4, **caractérisé en ce que** le support d'étanchéité (15, 23) comporte une partie cylindrique (16, 24) et une partie annulaire radiale (18, 26), fixée au support externe correspondant (8, 19), les moyens d'étanchéité (17, 25) s'étendant à la fois sur la partie cylindrique (16, 24) et sur la partie radiale (18, 26).

6. Dispositif selon l'une des revendications 1 à 5, **caractérisé en ce qu'**il comporte un moyeu d'alimentation (14) comportant un premier circuit de fluide apte à être relié fluidiquement aux chambres de pression (47, 58) et un second circuit de fluide apte à être reliée fluidiquement aux chambres de contre-pression (52, 59).

7. Dispositif (1) selon la revendication 6, **caractérisé en ce que** le premier support externe (8) et le second support externe (19) sont couplés en rotation au moyeu d'alimentation (14).

8. Dispositif (1) selon l'une des revendications 1 à 5, **caractérisé en ce que** les moyens d'entrée de couple comportent un organe d'entrée de couple (2), couplé en rotation au premier support externe (8) et délimitant avec celui-ci un volume interne (12) dans lequel sont logés les premiers et seconds mécanismes d'embrayage.

9. Véhicule automobile comportant au moins un dispositif (1) selon l'une des revendications 1 à 8.

## Patentansprüche

1. Kupplungsvorrichtung (1) für ein Kraftfahrzeug, umfassend Drehmomenteingangsmittel (2), die dazu bestimmt sind, mit einer Kurbelwelle gekoppelt zu werden, eine erste Drehmomentausgangswelle (31), eine zweite Drehmomentausgangswelle (37), einen ersten Nasskupplungsmechanismus, der geeignet ist, die Drehmomenteingangsmittel (2) und die erste Drehmomentausgangswelle (31) zu koppeln oder zu entkoppeln, einen zweiten Nasskupplungsmechanismus, der geeignet ist, die Drehmomenteingangsmittel (2) und die zweite Drehmomentausgangswelle (37) zu koppeln oder zu entkoppeln, der erste und der zweite Kupplungsmechanismus erste bzw. zweite Scheiben (13, 22) aufweisen, die auf einer ersten bzw. einer zweiten äußeren Halterung (8, 19) angebracht sind, die zu den Drehmomenteingangsmitteln gehört, wobei der erste und der zweite Kupplungsmechanismus außerdem erste bzw. zweite Gegenscheiben (32, 38) aufweisen, die auf einer ersten bzw. einer zweiten inneren Halterung (27, 33) angebracht sind, die mit der ersten bzw. mit der zweiten Drehmomentausgangswelle (31, 37) drehgekoppelt ist, wobei der erste und der zweite Kupplungsmechanismus einen ersten Kolben bzw. einen zweiten Kolben aufweisen, wobei jeder Kolben zwischen einer Einrückposition, in welcher der Kolben (45, 53) die Scheiben (13, 22) an die zugeordneten Gegenscheiben (32, 38) des entsprechenden Kupplungsmechanismus andrückt, und einer Ausrückposition, in welcher der Kolben (45, 53) die Scheiben (13, 22) und die Gegenscheiben (32, 38) des entsprechenden Kupplungsmechanismus freigibt, verschiebbar ist, wobei jeder Kolben (45, 53) einer Druckkammer (47, 58) und einer Gegendruckkammer (52, 59) zugeordnet ist, die sich beiderseits des entsprechenden Kolbens (45, 53) befinden, wobei wenigstens eine der Druckkammern (47, 58) insbesondere durch den entsprechenden Kolben (45, 53) und durch die entsprechende äußere Halterung (8, 19) begrenzt wird, wobei ein Dichtungsträger (15, 23) auf der entsprechenden äußeren Halterung (8, 19) befestigt ist, wobei Dichtungsmittel (17, 25) auf dem Dichtungsträger (15, 23) angebracht sind, wobei die Dichtungsmittel (17, 25) die Dichtigkeit zwischen dem Dichtungsträger (15, 23) und dem entsprechenden Kolben (45, 53) einerseits und die Dichtigkeit zwischen dem Dichtungsträger (15, 23) und der entsprechenden äußeren Halterung (8, 19) andererseits sicherstellen, wobei die Dichtungsmittel wenigstens einen Dichtungsring (17, 25) mit einer Dichtlippe (17c, 25c) aufweisen, der auf den Dichtungsträger (15, 23) aufgespritzt ist,
**dadurch gekennzeichnet, dass** der Dichtungsträger (15, 23) ringförmig ist und an der entsprechenden äußeren Halterung (8, 19) durch Befestigungsmittel (18a, 26a; 18b, 26b) befestigt ist, die sich nur über einen Teil des Umfangs des Dichtungsträgers (15, 23) erstrecken, wie zum Beispiel Punktbefestigungsmittel.

2. Vorrichtung nach Anspruch 1, **dadurch gekennzeichnet, dass** der Dichtungsträger (15, 23) an der äußeren Halterung (8, 19) durch Schweißen befestigt ist, insbesondere durch Laserschweißen (18a, 26a) oder durch Elektroschweißen.

3. Vorrichtung nach Anspruch 2, **dadurch gekennzeichnet, dass** der Dichtungsträger (15, 23) an der äußeren Halterung (8, 19) durch Nietung befestigt ist, zum Beispiel mittels extrudierter Niete (18b, 26b), die mit der entsprechenden äußeren Halterung (8, 19) stoffschlüssig verbunden sind.

4. Vorrichtung nach einem der Ansprüche 1 bis 3, **dadurch gekennzeichnet, dass** jede Druckkammer (47, 58) insbesondere durch den entsprechenden Kolben (45, 53) und durch die entsprechende äußere Halterung (8, 19) begrenzt wird, wobei ein Dichtungsträger (15, 23) auf jeder äußeren Halterung (8, 19) befestigt ist, wobei Dichtungsmittel (17, 25) auf jedem Dichtungsträger (15, 23) angebracht sind, wobei die Dichtungsmittel (17, 25) die Dichtigkeit zwischen dem entsprechenden Dichtungsträger (15, 23) und dem entsprechenden Kolben (45, 53) einerseits und die Dichtigkeit zwischen dem entsprechenden Dichtungsträger (15, 23) und der entsprechenden äußeren Halterung (8, 19) andererseits sicherstellen.

5. Vorrichtung nach einem der Ansprüche 1 bis 4, **dadurch gekennzeichnet, dass** der Dichtungsträger (15, 23) einen zylindrischen Teil (16, 24) und einen radialen ringförmigen Teil (18, 26), der an der entsprechenden äußeren Halterung (8, 19) befestigt ist, aufweist, wobei sich die Dichtungsmittel (17, 25) gleichzeitig auf dem zylindrischen Teil (16, 24) und auf dem radialen Teil (18, 26) erstrecken.

6. Vorrichtung nach einem der Ansprüche 1 bis 5, **dadurch gekennzeichnet, dass** sie eine Zufuhrnabe (14) aufweist, die einen ersten Fluidkreis, der geeignet ist, mit den Druckkammern (47, 58) fluidisch verbunden zu werden, und einen zweiten Fluidkreis, der geeignet ist, mit den Gegendruckkammern (52, 59) fluidisch verbunden zu werden, aufweist.

7. Vorrichtung (1) nach Anspruch 6, **dadurch gekennzeichnet, dass** die erste äußere Halterung (8) und die zweite äußere Halterung (19) mit der Zufuhrnabe (14) drehgekoppelt sind.

8. Vorrichtung (1) nach einem der Ansprüche 1 bis 5, **dadurch gekennzeichnet, dass** die Drehmomenteingangsmittel ein Drehmomenteingangsorgan (2) umfassen, das mit der ersten äußeren Halterung (8) drehgekoppelt ist und mit dieser das Innenvolumen (12) begrenzt, in welchem der erste und der zweite Kupplungsmechanismus aufgenommen sind.

9. Kraftfahrzeug, welches wenigstens eine Vorrichtung (1) nach einem der Ansprüche 1 bis 8 umfasst.

## Claims

1. Clutch device (1) for a motor vehicle, comprising torque input means (2) intended to be coupled to a crankshaft, a first torque output shaft (31), a second torque output shaft (37), a first wet clutch mechanism able to couple or uncouple the torque input means (2) and the first torque output shaft (31), a second wet clutch mechanism able to couple or uncouple the torque input means (2) and the second torque output shaft (37), the first and second clutch mechanisms respectively comprise first and second discs (13, 22) respectively mounted on a first and second external support (8, 19) belonging to the torque input means, the first and second clutch mechanisms additionally respectively comprising first and second counter-discs (32, 38) respectively mounted on a first and second internal support (27, 33) rotationally coupled respectively to the first and second torque output shaft (31, 37), the first and second clutch mechanisms respectively comprising a first piston and a second piston, each piston being moveable between a clutch engagement position in which said piston (45, 53) presses the discs (13, 22) firmly against the associated counter-discs (32, 38) of the corresponding clutch mechanism, and a clutch release position in which said piston (45, 53) releases the discs (13, 22) and the counter-discs (32, 38) of the corresponding clutch mechanism, each piston (45, 53) being associated with a pressure chamber (47, 58) and with a counter-pressure chamber (52, 59) which are situated on either side of the corresponding piston (45, 53), at least one of said pressure chambers (47, 58) being delimited in particular by the corresponding piston (45, 53) and by the corresponding external support (8, 19), a sealing support (15, 23) being fixed to the corresponding external support (8, 19), sealing means (17, 25) being mounted on the sealing support (15, 23), said sealing means (17, 25) providing sealing between said sealing support (15, 23) and the corresponding piston (45, 53), on the one hand, and providing sealing between said sealing support (15, 23) and the corresponding external support (8, 19), on the other hand, said sealing means comprising at least one annular seal (17, 25) with lip (17c, 25c) overmoulded onto the sealing support (15, 23), **characterized in that** the sealing support (15, 23) is annular and is fixed to the corresponding external support (8, 19) by fixing means (18a, 26a; 18b, 26b) extending over only a part of the circumference of said sealing support (15, 23), such as, for example, point fixing means.

2. Device according to Claim 1, **characterized in that** the sealing support (15, 23) is fixed to the external support (8, 19) by welding, for example by laser welding (18a, 26a) or by electric welding.

3. Device according to Claim 2, **characterized in that** the sealing support (15, 23) is fixed to the external support (8, 19) by riveting, for example by means of extruded rivets (18b, 26b) integrally formed with the corresponding external support (8, 19).

4. Device according to one of Claims 1 to 3, **characterized in that** each pressure chamber (47, 58) is delimited in particular by the corresponding piston (45, 53) and by the corresponding external support (8, 19), a sealing support (15, 23) being fixed to each external support (8, 19), sealing means (17, 25) being mounted on each sealing support (15, 23), said sealing means (17, 25) providing sealing between the corresponding sealing support (15, 23) and the corresponding piston (45, 53), on the one hand, and providing sealing between said corresponding sealing support (15, 23) and the corresponding external support (8, 19), on the other hand.

5. Device according to one of Claims 1 to 4, **characterized in that** the sealing support (15, 23) comprises a cylindrical part (16, 24) and a radial annular part (18, 26) which is fixed to the corresponding external support (8, 19), the sealing means (17, 25) extending both over the cylindrical part (16, 24) and over the radial part (18, 26).

6. Device according to one of Claims 1 to 5, **characterized in that** it comprises a supply hub (14) comprising a first fluid circuit able to be fluidically connected to the pressure chambers (47, 58) and a second fluid circuit able to be fluidically connected to the counter-pressure chambers (52, 59).

7. Device (1) according to Claim 6, **characterized in that** the first external support (8) and the second external support (19) are rotationally coupled to the supply hub (14).

8. Device (1) according to one of Claims 1 to 5, **characterized in that** the torque input means comprise a torque input member (2) rotationally coupled to the first external support (8) and delimiting therewith an internal volume (12) in which the first and second clutch mechanisms are housed.

9. Motor vehicle comprising at least one device (1) according to one of Claims 1 to 8.
